(19) Europäisches Patentamt
European Patent Office
Office européen des brevets

(11) Veröffentlichungsnummer : **0 035 169**
**B1**

(12) # EUROPÄISCHE PATENTSCHRIFT

(45) Veröffentlichungstag der Patentschrift : **22.06.83**

(51) Int. Cl.³ : **C 04 B 43/10**, C 04 B 41/22, C 04 B 31/42, C 04 B 31/26

(21) Anmeldenummer : **81101142.8**

(22) Anmeldetag : **18.02.81**

(54) **Formkörper aus geblähten Mineralien.**

(30) Priorität : **29.02.80 DE 3007738**

(43) Veröffentlichungstag der Anmeldung : **09.09.81 Patentblatt 81/36**

(45) Bekanntmachung des Hinweises auf die Patenterteilung : **22.06.83 Patentblatt 83/25**

(84) Benannte Vertragsstaaten : **BE DE FR GB NL SE**

(56) Entgegenhaltungen :
**CH A 520 084**
**DE A 2 240 228**
**DE A 2 813 941**
**DE B 1 484 072**

(73) Patentinhaber : **HOECHST AKTIENGESELLSCHAFT**
**Postfach 80 03 20**
**D-6230 Frankfurt/Main 80 (DE)**

(72) Erfinder : **Voetz, Franz Josef**
**Weilstrasse 26**
**D-6277 Camberg/Taunus (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 035 169 B1

# Formkörper aus geblähten Mineralien

Die Verwendung loser Schüttungen geblähter Mineralien, wie Perlit und Vermiculit, als Dämmaterial in Hohlkammerdecken und zweischaligen Mauerwerken ist seit Jahren geübte Praxis. Müssen solche Decken oder Mauern aber geöffnet werden, rieselt die gesamte Schüttung aus der Öffnung. Um diesen Nachteil zu vermeiden wurde versucht, geblähte Mineralien durch Bitumen, Melaminformol oder Phenolformolharze zu verfestigen. Diese Materialien sind jedoch entweder brennbar oder müssen in so hoher Konzentration eingesetzt werden, daß deren Verwendung unwirtschaftlich wird. Aus der CH-A-520 084 ist bereits bekannt, die Haftfestigkeit von Bitumen auf Gestein dadurch zu verbessern, indem man das Gestein vorbehandelt mit Umsetzungsprodukten aus Fettaminen und Kohlendioxid. Eine Hydrophobierung von Vermiculit ist in der DE-A1-2 813 941 beschrieben. Als Hydrophobierungsmittel dienen hier flüchtige Aminverbindungen. Die Verfestigung von Vermiculit und Perlit zu Formkörpern mit Hilfe von Alkali-Silikat ist in der DE-A-2 240 228 und in der DE-B-1 484 072 beschrieben.

Es wurde nun gefunden, daß sich geblähte Mineralien besser zu Formkörpern verfestigen lassen, wenn sie vorher mit einem Fettamin hydrophobiert wurden.

Gegenstand der Erfindung sind Formkörper aus wasserglasgebundenen hydrophobierten, geblähten Mineralien, die erhalten werden durch Verfestigung eines Gemisches aus Wasserglas, Katalysator und einem geblähten Mineral, das mit einem Hydrophobiermittel behandelt wurde, bestehend aus

a) einem Fettamin der Formel

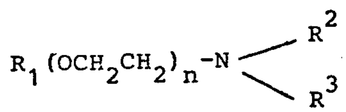

wobei $R_1$ $C_8$-$C_{22}$, vorzugsweise $C_{14}$-$C_{22}$-Alkyl oder -Alkenyl oder $C_8$-$C_{22}$-Alkylphenyl, $R_2$ und $R_3$ Wasserstoff, $C_1$-$C_4$-Alkyl oder Alkenyl, Phenyl oder Benzyl und n eine Zahl von 0 bis 4 bedeuten,

b) einer Fettsäure oder einem Fettsäureester der Formel

$$R_5CO(OCH_2CH_2)_mOH$$

oder einem Fettalkohol der Formel

$$R_6(OCH_2CH_2)_mOH$$

wobei $R_5$ $C_8$-$C_{22}$, vorzugsweise $C_{14}$-$C_{22}$-Alkyl oder -Alkenyl, $R_6$ $C_9$-$C_{23}$, vorzugsweise $C_{15}$-$C_{23}$-Alkyl oder -Alkenyl und m eine Zahl von 0 bis 2 bedeuten, sowie

c) einer niedermolekularen Säure.

Als Fettsäuren b) für das Hydrophobiermittel kommen vor allem die gesättigten und ungesättigten Fettsäuren sowie deren Mischungen in Frage, wie sie bei der Verseifung von natürlichen Fetten erhalten werden, wie beispielsweise Talgfettsäure, Cocosfettsäure, Stearinsäure, Ölsäure oder Palmitinsäure. Entsprechendes gilt für die Fettalkohole unter b) und die Fettamine a). Bei den niedermolekularen Säuren c) handelt es sich im wesentlichen um $C_1$-$C_4$-Carbonsäuren wie Ameisensäure oder Essigsäure, Dicarbonsäuren wie Oxalsäure oder Malonsäure, Hydroxycarbonsäuren wie Milchsäure und einwertige anorganische Säuren wie Salzsäure oder Salpetersäure aber auch Amidosulfonsäure. Das molare Mischungsverhältnis der einzelnen Komponenten a), b) und c) kann in weiten Grenzen schwanken und beträgt von 10 : 1 : 1 über 1 : 1 : 10 bis zu 1 : 10 : 1.

Die Komponenten a) bis c) dieses Hydrophobiermittels werden zusammen geschmolzen und das Gemisch in Form einer 2 bis 10, vorzugsweise 4 bis 7 %igen wässrigen Dispersion auf die geblähten Mineralien aufgesprüht. Anschließend wird getrocknet. Man kann dieses Hydrophobiermittel auch direkt im Anschluß an den Blähvorgang auf das Mineral aufbringen. Eine separate Trocknung ist dann nicht erforderlich.

Das auf diese Weise hydrophobierte Mineral wird mit Wasserglas und einem katalysator vermischt und nach einer Mischzeit von ca. 2-10 Minuten in die entsprechende Form gegeben, wo das Gemisch unter Druck verfestigt wird. Nach 5 bis 30 Min. können die Formkörper aus der Form genommen werden. Sie werden zur Entfernung des Wassers abschließend getrocknet, entweder durch Stehenlassen bei Raumtemperatur oder, wenn eine beschleunigte Trocknung erwünscht ist, durch Erwärmen, beispielsweise auf 120 bis 150° C während ca. 5 Minuten.

Als Wasserglas kommen solche Produkte in Frage, die $SiO_2$ und $Na_2O$ in Gewichtsverhältnissen von 4,5 : 1 bis 2,5 : 1, vorzugsweise 3,9 : 1 bis 3,1 : 1, oder $SiO_2$ zu $K_2O$ von 2,8 : 1 bis 1,5 : 1, vorzugsweise 2,3 : 1 bis 1,9 : 1 enthalten, entsprechend 30-60 Be°.

Als Katalysator werden Säurebildner eingesetzt, die durch Reaktion mit dem Alkalisilikat in dem Wasserglas freie Kieselsäure ausfällen, wie beispielsweise Alkali- oder Ammonium-hydrogencarbonate oder -hydrogensulfate, vorzugsweise Natriumhydrogencarbonat und Natriumhydrogensulfat, oder

Carbonsäurealkylester mit jeweils 2 bis 14, vorzugsweise 4 bis 12 C-Atomen im Alkyl- und Carbonsäureteil. Besonders bevorzugt wird Glyoxal eingesetzt, da es wasserlöslich, nicht brennbar, gering toxisch und in seiner Reaktionszeit steuerbar ist. Um eine ausreichende Verfestigung der Formkörper zu erreichen, verwendet man soviel Wasserglas, daß die Menge an Alkalisilikat 5 bis 15 Gew.-% beträgt, bezogen auf das Gemisch des Minerals. Von dem Katalysator benötigt man 0,1 bis 4 Gew.-%, ebenfalls bezogen auf das Mineral. Um eine bessere Verteilung zu erreichen, werden das Wasserglas und der Katalysator vor der Mischung mit dem Mineral mit der 1-5-fachen Mengen Wasser verdünnt. Diese Mischung des hydrophobierten Minerals mit dem Wasserglas und dem Katalysator erfolgt in einem hierzu geeigneten Mischaggregat während ca. 2 bis 10 Minuten.

Diese Mischung aus geblähtem, hydrophobiertem Mineral, Wasserglas und Katalysator kann zu jeder Art von Formkörpern verfestigt werden, beispielsweise zu Platten, die allein oder zusammen mit Gipskartonplatten als wärme- und schalldämmende Decken- und Wandplatten eingesetzt werden. Durch Verwendung geeigneter Formen können auch Hohlkörper hergestellt werden, die sich als auslaufsicheres Verpackungsmaterial oder als Pflanztöpfe eignen, in deren Poren wegen ihrer offenporigen Struktur Düngemittel- und Pflanzenschutzmittel-Depots eingearbeitet werden können. Mit kubischen und zylindrischen Formen können Körper hergestellt werden, die in Betondecken und Betonfertigteilen als Durchbruch für Installationsanlagen eingesetzt werden. Dachpfannen und zementgebundene Dach- und Fassadenplatten können mit der oben beschriebenen Mischung beschichtet werden, die auf diese Weise eine isolierende Schicht erhalten.

## Beispiel 1

100 g hydrophobiertes Vermiculit werden mit jeweils 50 g bzw. 100 g einer der drei weiter unten angegebenen Mischungen aus Wasserglas, Katalysator und Glyoxal in einer Küchenmaschine 5 Minuten miteinander vermischt. Die Mischung wurde in eine Form mit einem inneren Durchmesser von 10 cm gefüllt und plangestrichen. Von oben wurde ein Metallplatte aufgelegt und ein Fallkörper von 2,5 kg wurde 10 mal aus 30 cm Höhe fallengelassen um den Formkörper zu verdichten.

Das Vermiculit enthielt 0,7 Gew.-% (Vermiculit I), 1 Gew.-% (Vermiculit II) bzw. 1,5 Gew.-% (Vermiculit III) eines Hydrophobiermittels der folgenden Zusammensetzung :

29,9 % Stearylamin
16,7 % Talgfettsäure
3,4 % Essigsäure
20 % Isopropanol
30 % Elektrolytfreies Wasser

| Wasserglasmischung | 1 | 2 | 3 |
|---|---|---|---|
| Natriumsilikat 35-37 Be° | 100 g | 100 g | 100 g |
| Wasser | 200 g | 300 g | 200 g |
| Glyoxal 40 %-ig | 10 g | 10 g | 20 g |

Ergebnisse :

| | | | | | | | | |
|---|---|---|---|---|---|---|---|---|
| Vermiculit I | 100 g | 100 g | | | | | | |
| Vermiculit II | | | 100 g | 100 g | | | 100 g | 100 g |
| Vermiculit III | | | | | 100 g | 100 g | | |
| Wasserglas- -Mischung 1 | 50 g | 100 g | 50 g | 100 g | 50 g | 100 g | | |
| -Mischung 2 | | | | | | | 50 g | |
| -Mischung 3 | | | | | | | | 50 g |
| Raumgewicht der Körper g/l | 195 | 195 | 250 | 250 | 240 | 260 | 210 | 230 |
| Festigkeit | gut | gut | s. gut | s. gut | gut | s. gut | gut | gut |

## Beispiel 2

100 g hydrophobiertes Perlit wurden mit jeweils 50 g bzw. 100 g einer der drei weiter unten angegebenen Mischungen aus Wasserglas, Katalysator und Glyoxal in einer Küchenmaschine 5 Minuten miteinander vermischt. Die Mischung wurde in eine Form mit einem inneren Durchmesser von 10 cm gefüllt und plangestrichen. Von oben wurde eine Metallplatte aufgelegt und ein Fallkörper von 2,5 kg wurde 10 mal aus 30 cm Höhe fallengelassen um den Formkörper zu verdichten.

Das Perlit enthielt 0,5 Gew.-% (Perlit I), 1 Gew.-% (Perlit II) bzw. 1,5 Gew.-% (Perlit III) eines Hydrophobiermittels der folgenden Zusammensetzung :

45 % Stearylamin
2,5 % Ameisensäure
2,5 % Stearinsäure
20 % Isopropanol
30 % Elektrolytfreies Wasser

| | | | | | | | | |
|---|---|---|---|---|---|---|---|---|
| Wasserglasmischung | | | 1 | | 2 | 3 | | |
| Natriumsilikat 35-37 Be° | | | 100 g | | 100 g | 100 g | | |
| Wasser | | | 200 g | | 300 g | 200 g | | |
| Glyoxal 35 %-ig | | | 10 g | | 10 g | 20 g | | |
| Perlit I | 100 g | 100 g | 100 g | | | | | |
| Perlit II | | | | 100 g | 100 g | 100 g | | |
| Perlit III | | | | | | | 100 g | 100 g |
| Wasserglas | | | | | | | | |
| -Mischung 1 | 50 g | | | 50 g | | | 50 g | |
| -Mischung 2 | | 50 g | | | 50 g | | | 50 g |
| -Mischung 3 | | | 50 g | | | 50 g | | |
| Raumgewicht der Körper g/l | 340 | 280 | 230 | 280 | 250 | 230 | 250 | 230 |
| Festigkeit | gut | s. gut | s. gut | ausgez. | s. gut | s. gut | s. gut | s. gut |

**Anspruch**

Formkörper aus wasserglasgebundenen hydrophobierten, geblähten Mineralien, die erhalten werden durch Verfestigung eines Gemischs aus Wasserglas, Katalysator und einem geblähten Mineral, dadurch gekennzeichnet, dab das geblähte Mineral mit einem Hydrophobiermittel behandelt wurde, bestehend aus

a) einem Fettamin der Formel

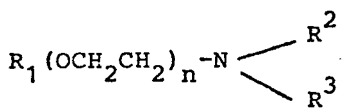

wobei $R_1$ $C_8$-$C_{22}$, vorzugsweise $C_{14}$-$C_{22}$-Alkyl oder -Alkenyl oder $C_8$-$C_{22}$-Alkylphenyl, $R_2$ und $R_3$ Wasserstoff, $C_1$-$C_4$-Alkyl oder Alkenyl, Phenyl oder Benzyl und n eine Zahl von 0 bis 4 bedeuten,

b) einer Fettsäure oder einem Fettsäureester der Formel

$$R_5CO(OCH_2CH_2)_mOH$$

oder einem Fettalkohol der Formel

$$R_6(OCH_2CH_2)_mOH$$

wobei $R_5$ $C_8$-$C_{22}$, vorzugsweise $C_{14}$-$C_{22}$-Alkyl oder -Alkenyl, $R_5$ $C_9$-$C_{23}$, vorzugsweise $C_{15}$-$C_{23}$-Alkyl oder -Alkenyl und m eine Zahl von 0 bis 2 bedeuten, sowie

c) einer niedermolekularen Säure.

**Claim**

Shaped articles made from water glass-bonded hydrophobized expanded minerals, obtained by solidification of a mixture of water glass, catalyst and an expanded mineral characterized by that the expanded mineral is pretreated with a hydrophobizing agent which comprises substantially

a) a fatty amine of the formula

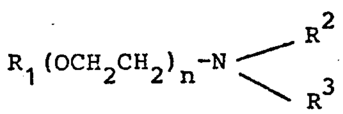

in which $R_1$ is $C_8$-$C_{22}$, preferably $C_{14}$-$C_{22}$-alkyl or -alkenyl, or $C_8$-$C_{22}$-alkylphenyl, $R_2$ and $R_3$ each are hydrogen, $C_1$-$C_4$-alkyl or -alkenyl, phenyl or benzyl and n is a number of from 0 to 4 ;

b) a fatty acid of the formula

$$R_5CO(OCH_2CH_2)_mOH$$

or a fatty alcohol of the formula

$$R_6(OCH_2CH_2)_mOH$$

in which formulae $R_5$ is $C_8$-$C_{22}$, preferably $C_{14}$-$C_{22}$-alkyl or -alkenyl, $R_6$ is $C_9$-$C_{23}$, preferably $C_{15}$-$C_{23}$-alkyl or -alkenyl, and m is a number of from 0 to 2 ; and

c) a low molecular weight acid.

**Revendication**

Objets moulés en matières minérales expansées, hydrofugées et liées par du verre soluble, qui sont obtenus par consolidation d'un mélange de verre soluble, d'un catalyseur et d'une matière minérale expansée, objets caractérisés en ce que la matière minérale expansée a été traitée par un agent hydrofugeant constitué

a) d'une amine grasse répondant à la formule

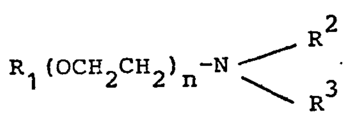

dans laquelle $R_1$ représente un radical alkyle ou un radical alcényle contenant chacun de 8 à 22 atomes de carbone, de préférence de 14 à 22, ou un radical alkylphényle en $C_8$-$C_{22}$, $R_2$ et $R_3$ représentent chacun l'hydrogène, un alkyle ou un alcényle en $C_1$-$C_4$, un phényle ou un benzyle et n désigne un nombre de 0 à 4,

b) d'un acide gras ou d'un ester d'acide gras répondant à la formule

$$R_5CO(OCH_2CH_2)_mOH$$

ou d'un alcool gras répondant à la formule

$$R_6(OCH_2CH_2)_mOH$$

formules dans lesquelles $R_5$ représente un radical alkyle ou un radical alcényle contenant chacun de 8 à 22 atomes de carbone, de préférence de 14 à 22, $R_6$ représente un radical alkyle ou alcényle contenant de 9 à 23 atomes de carbone, de préférence 15 à 23, et m représente un nombre de 0 à 2, ainsi que c) d'un acide à bas poids moléculaire.